# EUROPEAN PATENT APPLICATION

(11) **EP 4 560 495 A1**
(43) Date of publication of application: **28.05.2025**
(21) Application number: 24215731.1
(22) Date of filing: 27.11.2024
(51) Int. Cl.: G06F 16/903, G06N 3/00

(54) **METHODS AND APPARATUS TO UTILIZE CACHED GENERATIVE ARTIFICIAL INTELLIGENCE RESPONSES**

(30) Priority: 27.11.2023 US 202363602969 P; 22.12.2023 US 202318395325
(71) Applicant: McAfee, LLC, San Jose, CA 95002 (US)
(72) Inventor: Lancioni, German, San Jose, CA, 95127 (US); King, Jonathan Brent, Hillsboro, OR, 97123 (US); Grobman, Steve Leonard, Flower Mound, TX, 75022 (US)
(74) Representative: Samson & Partner Patentanwälte mbB

(57) **Abstract**

Systems, apparatus, articles of manufacture, and methods to utilize cached generative artificial intelligence responses are disclosed. An example apparatus includes interface circuitry to access a request to a generative artificial intelligence model, computer readable instructions, and programmable circuitry to at least one of execute or instantiate the instructions to replace a named entity within the request with a generic tag to generate a modified request, tokenize the modified request to create an array of tokens, detect a similar prior request based on the array of tokens, and after detection of the similar prior request, cause output of a cached response to the request without execution of the generative artificial intelligence model.

## Description

### RELATED APPLICATION

This patent claims the benefit of U.S. Provisional Patent Application No. 63/602,969, which was filed on November 27, 2023. U.S. Provisional Patent Application No. 63/602,969 is hereby incorporated herein by reference in its entirety. Priority to U.S. Provisional Patent Application No. 63/602,969 is hereby claimed.

### FIELD OF THE DISCLOSURE

This disclosure relates generally to machine learning and, more particularly, to methods and apparatus to utilize cached generative artificial intelligence responses.

### BACKGROUND

A very popular advance in the field of Artificial Intelligence (AI) has been the advent of Generative artificial intelligence (AI). Generative AI utilizes machine learning models to enable an output (e.g., an image, text, etc.) Generative AI, such as a Large Language Model (LLM), may be used for conversation with a user, either as a general-purpose chat session, an instruction-based interaction, or some other kind of specialized prompt, response, and/or action dynamic.

### BRIEF DESCRIPTION OF THE DRAWINGS

FIG. 1 is a block diagram of an example generative AI caching platform constructed in accordance with teachings of this disclosure and shown in an example environment of use.
FIG. 2 is a flowchart representative of example machine readable instructions and/or example operations that may be executed, instantiated, and/or performed by example programmable circuitry to implement the example generative AI caching platform of FIG. 1.
FIG. 3 is a diagram illustrating example inputs and their corresponding similarities.
FIG. 4 is a diagram illustrating amounts of time taken to generate responses, using various generative AI caching strategies.
FIG. 5 is a block diagram of an example processing platform including programmable circuitry structured to execute, instantiate, and/or perform the example machine readable instructions and/or perform the example operations of FIG. 2 to implement the generative AI caching platform 110 of FIG. 1.
FIG. 6 is a block diagram of an example implementation of the programmable circuitry of FIG. 5.
FIG. 7 is a block diagram of another example implementation of the programmable circuitry of FIG. 5.
FIG. 8 is a block diagram of an example software/firmware/instructions distribution platform (e.g., one or more servers) to distribute software, instructions, and/or firmware (e.g., corresponding to the example machine readable instructions of FIG. 2) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Generative artificial intelligence (AI) is an expanding area of AI and/or machine learning. Generative AI utilizes machine learning models to enable an output (e.g., an image, text, etc.) to be generated based on an input (e.g., a prompt.) Generative AI can be used for many different tasks including, for example, explaining why an email message is malicious, explaining why a user should (or should not) take a particular action, etc.

Examples disclosed herein utilize artificial intelligence for providing explanations to users (e.g., scam explanations, threat explanations, etc.), while attempting to limit the computational expense of providing such an explanation. While examples are disclosed herein in the context of spam explanations, threat explanations, scam explanations, etc., such approaches could additionally or alternatively be used in other contexts where a machine learning model is used to generate content that is provided to a user.

Artificial intelligence (AI), including machine learning (ML), deep learning (DL), Large Language Models (LLMs) and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and leverage such patterns and/or associations when processing input data such that other input(s) result in output(s) consistent with the recognized patterns and/or associations.

Many different types of machine learning models and/or machine learning architectures exist. In examples disclosed herein, a Large Language Model (LLM), such as ChatGPT, is used. Using an LLM enables customized messages to be generated. In general, machine learning models/architectures that are suitable to use in the example approaches disclosed herein will be transformer-type models, that receive one or more inputs, and generate a corresponding output (e.g., a textual message). However, other types of machine learning models could additionally or alternatively be used.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Beyond initial training of a model, further training, sometimes referred to as fine-tuning may be performed. Fine-tuning involves taking an existing, pre-trained model, and further training the model on a smaller, task-specific dataset. An example goal of this process is to make the model adapt to the nuances and requirements of the target task while retaining the valuable knowledge and representations the model has acquired during the initial pre-trained training phase.

In other words, the pre-trained model typically serves as a starting point, providing a foundation of generalized knowledge that spans across various domains. For instance, in natural language processing, pre-trained language models (e.g., GPT-3) have already learned grammar, syntax, and world knowledge from extensive text corpora. Fine-tuning such pre-trained models builds upon this foundation by adjusting the model's weights and parameters based on the new, task-specific data.

To accomplish fine-tuning, a dataset that is specific to the task to be performed is used. This dataset contains examples or samples relevant to the task, often with associated labels or annotations. Thus, examples disclosed herein may utilize a model that has been fine-tuned using sample explanations of whether a message is a spam message or not. In some examples, the explanations may be annotated with labels to identify particular portions and/or features of the explanations. During fine-tuning, the model is trained to recognize patterns and features in the task-specific data, aligning the internal representations within the model to the requirements of the target task.

Fine-tuning may involve not only updating the model's weights but also adjusting hyperparameters like learning rates, batch sizes, and regularization techniques to ensure that the model converges effectively on the new task. Depending on the complexity of the task, architectural changes may also be made to the model, such as freezing certain layers, adding task-specific layers, or modifying the model structure. Fine-tuning is a powerful technique used in various domains, including natural language processing, computer vision, recommendation systems, and more, as it enables the adaptation of pre-trained models to solve specific real-world problems efficiently and effectively.

Once training is complete, the model is deployed for use as an executable construct (e.g., software instructions) that processes an input and provides an output. Such execution of the model is often referred to as an inference phase. In the inference phase, data to be analyzed (e.g., live data) is input to the model, and the model is executed to create an output. This inference phase can be thought of as the AI "thinking" to generate the output based on what was learned from the training and/or fine-tuning (e.g., by executing the model to apply the learned patterns and/or associations to the live data). In some examples, input data undergoes pre-processing before being used as an input to the machine learning model. Moreover, in some examples, the output data may undergo post-processing after it is generated by the model to transform the output data into a useful result (e.g., a display of data, an instruction to be executed by a machine, etc.).

In some examples, the trained model is executed by a third party entity (e.g., a service provider). Such a third party might not have any interest in the result of the executed model except for providing that result to the party that requested the execution of the model. In some other examples, the trained model is executed by the entity seeking the result of the execution of the trained model (e.g., the model is locally executed on hardware owned and/or operated by the entity requesting execution).

Unfortunately, current Generative AI (GenAI) applications are computationally expensive to run. This is mainly due to the cost of the hardware required to run inference (i.e., graphics processing units (GPU)s or neural processing units (NPU)s) and the complexity of the AI models that take a long time to process a request. Because of these constraints, most vendors apply limits to restrict how much this technology can be used by users. For example, GenAI vendors typically limit the number of requests a user is allowed to request execution of within a time period, and/or charge customers per transaction so that the cost of execution does not get out of control.

While applying virtual limits is a common workaround, there are scenarios where this is either not applicable or not an acceptable strategy. For a cybersecurity company that needs to protect customers using Generative AI, limiting how much protection a customer gets and/or how quickly they receive such protection, are not reasonable options.

Example approaches disclosed herein utilize a cache strategy that can recycle GenAI inferences from previous requests, even if the current request is not exactly the same as the cached one. In some examples, this is achieved by leveraging the MinHash of the tokens provided by the GenAI tokenizer and a data structure to discover highly similar requests that can be served from cached inferences, instead of re-running the expensive GenAI model repeatedly in response to similar requests.

In some examples, a two-stage cache mechanism is used based on the MinHash of the tokens of a given input text (e.g., a request). The first stage aims to discover highly similar input text, as compared to a previous request, that can be re-used to return a cached AI response. If this discovery is not successful, a second stage (slightly more computationally expensive) applies Named Entity Recognition (NER) to replace the entities of the text with generic tags, and then attempts to discover highly similar requests from the cache. When these two stages fail to discover a similar entry from the cache, then a cache miss is observed and the GenAI model is executed, and the resulting artifacts are cached for future use.

Existing approaches attempt to use a traditional cache that only returns a match when the input is identical to a previously saved record. However, identical matches in this context are rare, meaning that the use of identical matches is not sufficient, as tiny variations in the input text would result in a cache miss, even though the generative AI response would end up being very similar (e.g., sufficient for responding to the request).

Alternatively, some generative AI cache strategies propose the use of similarity of the input by using yet another Generative AI model that can identify if two questions are similar in intent. While this may work in some scenarios (e.g., question answering/chatbots), it is not applicable to more sensitive use cases, such as malicious intent explanations (e.g., a request to explain why an item/message may be malicious). What is more, using a Generative AI model to check if the input is similar to a cached one to avoid running another Generative AI model is not efficient and diminishes the gain achieved by such cache.

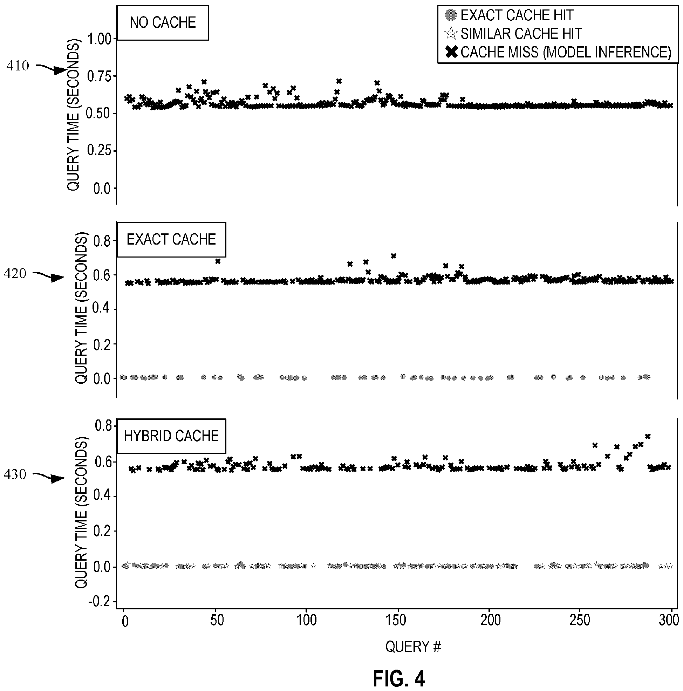

Examples disclosed herein address disadvantages of existing approaches by not only incorporating the benefits of a traditional cache, but also expanding the hit capability of such cache based on similarity fetching using two different stages. These stages are ordered to increase (e.g., maximize) throughput, while reducing (e.g., minimizing) cost and/or latency. The first stage is very affordable in this respect. The second stage, even though it is a little bit more computationally expensive than the first stage, is still a fraction of the cost that would take to run the Generative AI inference. In some examples, the proposed cache can provide a throughput improvement of up to 98% under the tested scenarios (see FIG. 4 and its associated description).

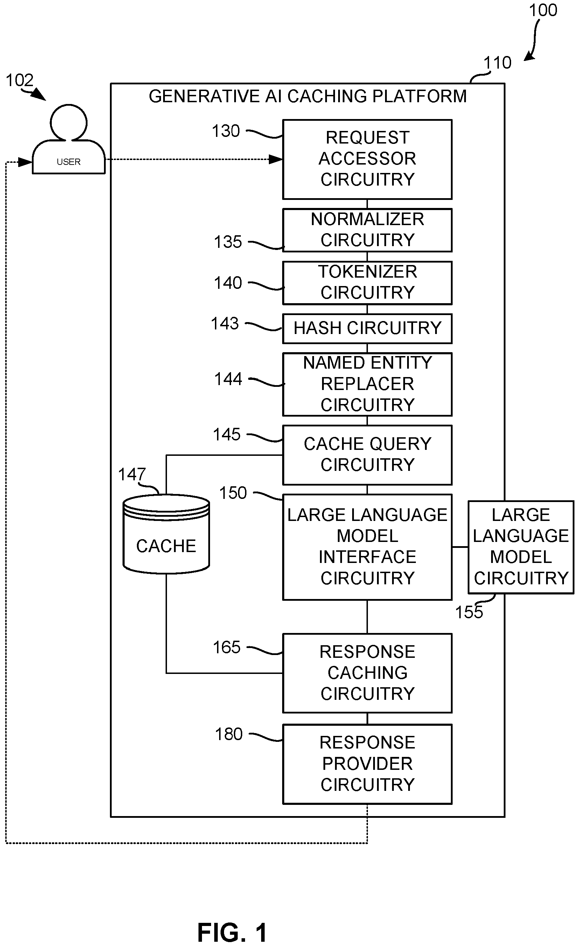

FIG. 1 is a block diagram of an example generative AI caching platform constructed in accordance with teachings of this disclosure and shown in an example environment of use. The example generative AI caching platform 110 of FIG. 1 operates to receive a request from a user 102 and provide a response to the user 102. The generative AI caching platform 110 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the generative AI caching platform 110 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

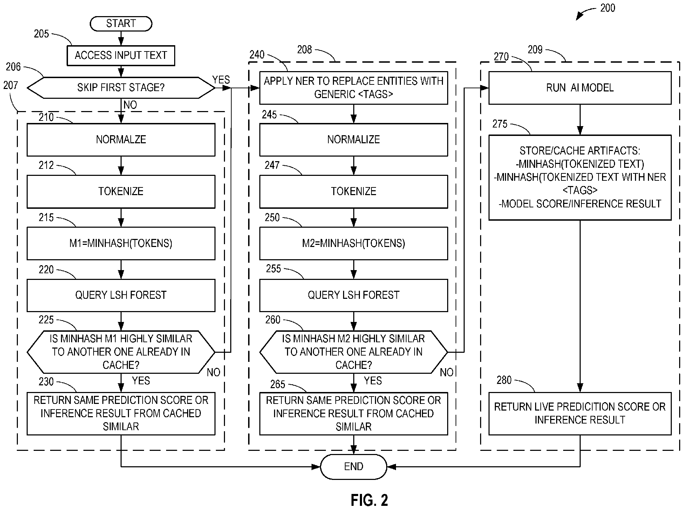

In some examples, the generative AI caching platform 110 is instantiated by programmable circuitry executing caching circuitry instructions and/or configured to perform operations such as those represented by the flowchart of FIG. 2. In examples disclosed herein, an entity (e.g., a software as a service provider, a cybersecurity provider, etc.) operates the generative AI caching platform 110 to provide a large language model service to one or more users (collectively represented in FIG. 1 by the user 102).

In some examples, the generative AI caching platform 110 is independent of a large language model service provider and, instead, operates as a middle-man, that attempts to re-use responses to queries (e.g., prompts) received from the user 102 based on prior responses. However, in some examples, the entity operating the generative AI caching platform 110 and the large language model may be a same entity.

The users 102 of the illustrated example of FIG. 1 include any user of the generative AI caching platform 110. Such users may be customers of the generative AI caching platform 110. Such users may subscribe to the service(s) provided by the entity operating the generative AI caching platform 110.

The example generative AI caching platform 110 of the illustrated example of FIG. 1 includes request accessor circuitry 130, normalizer circuitry 135, tokenizer circuitry 140, hash circuitry 143, named entity replacer circuitry 144, cache query circuitry 145, a cache 147, large language model interface circuitry 150, large language model circuitry 155, response caching circuitry 165, and response provider circuitry 180.

In some examples, the generative AI caching platform 110 includes means for accessing a request. For example, the means for accessing may be implemented by request accessor circuitry 130. The example request accessor circuitry 130 of the illustrated example of FIG. 1 receives a prompt from a user. In some examples, the prompt may be received via an application programming interface (API). In some other examples, the prompt may be received via a web interface. In some examples, the prompt may originate from an application (e.g., an email application) on behalf of the user.

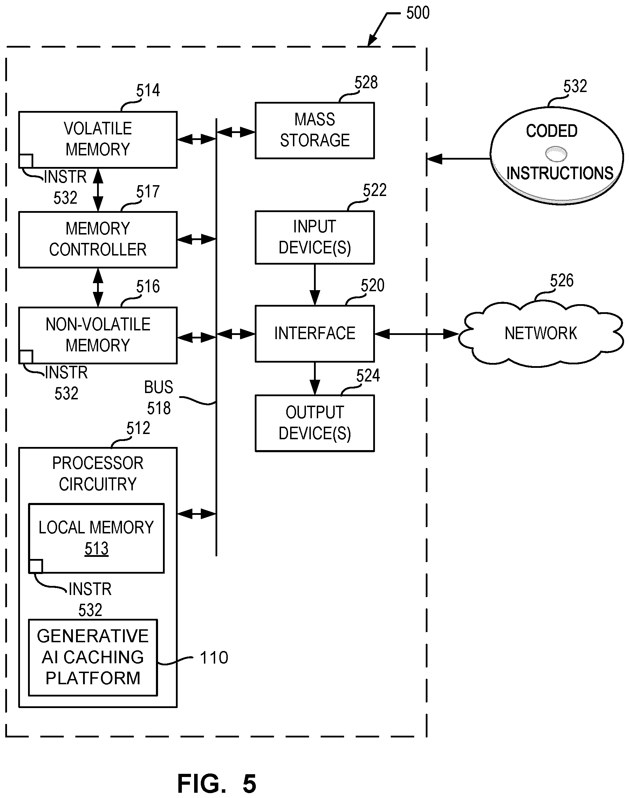

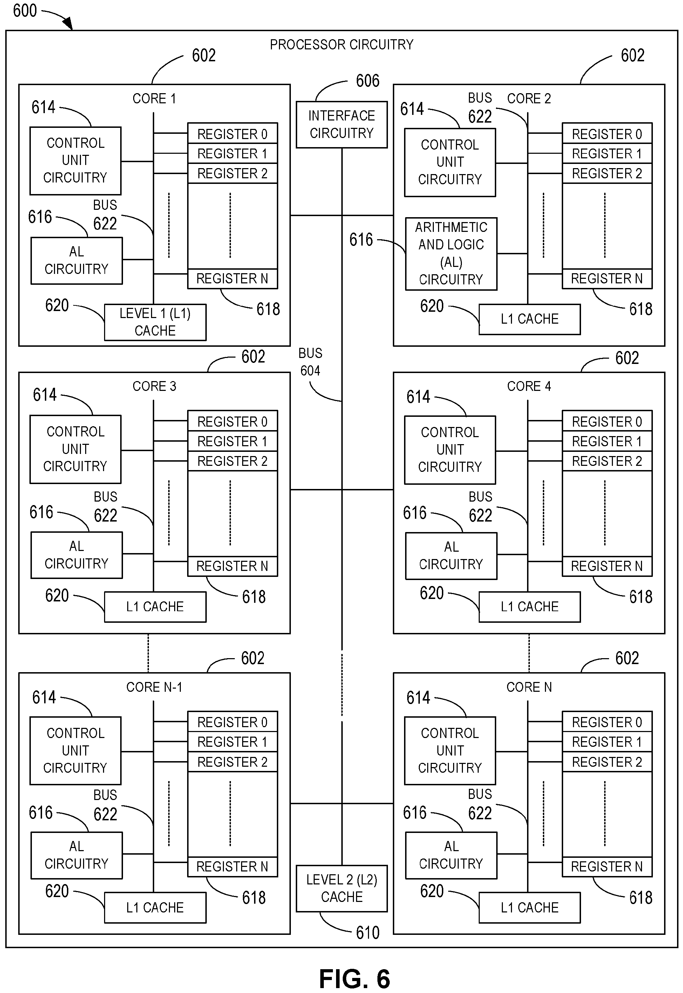

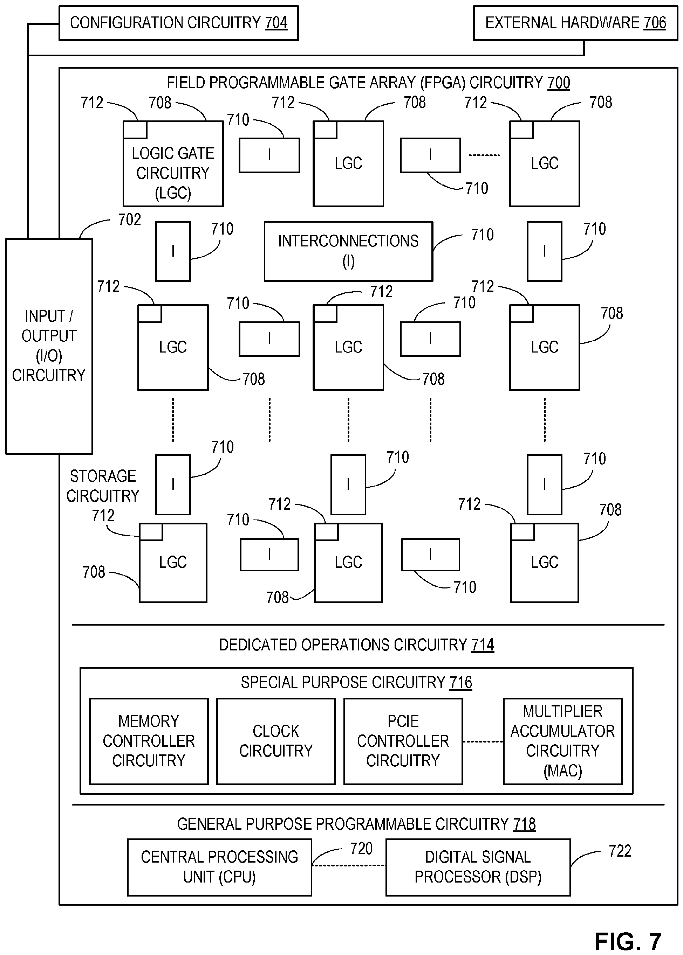

In some examples, the request accessor circuitry 130 may be instantiated by programmable circuitry such as the example programmable circuitry 512 of FIG. 5. For instance, the request accessor circuitry 130 may be instantiated by the example microprocessor 600 of FIG. 6 executing machine executable instructions such as those implemented by at least blocks 702, 704 of FIG. 7. In some examples, request accessor circuitry 130 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the request accessor circuitry 130 may be instantiated by any other combination of hardware, software, and/or firmware. For example, the request accessor circuitry 130 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for normalizing a request. For example, the means for normalizing may be implemented by normalizer circuitry 135. The example normalizer circuitry 135 of the illustrated example of FIG. 1 normalizes the request received by the request accessor circuitry 130. In examples disclosed herein, the request is a text request (e.g., a prompt, a potentially malicious message, etc.). To normalize the request, the example normalizer circuitry 135 converts the text to a common case (e.g., lower case, upper case, etc.). In some examples, non-textual characters (e.g., emojis, monetary symbols, images, etc.) are removed from the text. In some other examples, additional text processing is performed on the text to, for example, standardize punctuation (e.g., replace double spaces with single spaces, replace all semicolons with commas, remove paragraph breaks, remove non-printable symbols, etc.)

In some examples, the normalizer circuitry 135 may be instantiated by programmable circuitry such as the example programmable circuitry 512 of FIG. 5. For instance, the normalizer circuitry 135 may be instantiated by the example microprocessor 600 of FIG. 6 executing machine executable instructions such as those implemented by at least blocks 702, 704 of FIG. 7. In some examples, the normalizer circuitry 135 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the normalizer circuitry 135 may be instantiated by any other combination of hardware, software, and/or firmware. For example, the normalizer circuitry 135 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for tokenizing text. For example, the means for tokenizing may be implemented by tokenizer circuitry 140. The example tokenizer circuitry 140 of the illustrated example of FIG. 1 tokenizes the normalized text to produce an array of tokens. The array of tokens includes elements corresponding to character sequences (e.g., words) appearing in the normalized text. In some examples, rather than attempting to perform processing of the input text during normalization (e.g., removing non-printable characters, removing symbols, etc.), the example tokenizer circuitry 140 removes and/or replaces tokens that are related to symbols (e.g., emojis, non-printable characters, etc.)

In some examples, the tokenizer circuitry 140 may be instantiated by programmable circuitry such as the example programmable circuitry 512 of FIG. 5. For instance, the tokenizer circuitry 140 may be instantiated by the example microprocessor 600 of FIG. 6 executing machine executable instructions such as those implemented by at least blocks 702, 704 of FIG. 7. In some examples, the tokenizer circuitry 140 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the tokenizer circuitry 140 may be instantiated by any other combination of hardware, software, and/or firmware. For example, the tokenizer circuitry 140 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for hashing tokens. For example, the means for hashing may be implemented by hash circuitry 143. The example hash circuitry 143 of the illustrated example of FIG. 1 performs a minhash operation on the array of tokens, resulting in a MinHash value. A MinHash is a Locality Sensitive Hashing (LSH) scheme that can be used to measure the similarity between two samples, using for example the Jaccard distance. While in examples disclosed herein a minhash is used, any other hashing technique may additionally or alternatively be used that enables detection of similar arrays of tokens stored in a cache. In some alternative examples, a MinHash of the input text (e.g., in a normalized format) may be used. However, using a tokenized version of the input text may perform better, as such an approach focuses on tokens, rather than the text itself, and thereby allows for minor permutations within input texts to be accounted for.

In some examples, the hash circuitry 143 may be instantiated by programmable circuitry such as the example programmable circuitry 512 of FIG. 5. For instance, the hash circuitry 143 may be instantiated by the example microprocessor 600 of FIG. 6 executing machine executable instructions such as those implemented by at least blocks 702, 704 of FIG. 7. In some examples, the hash circuitry 143 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the hash circuitry 143 may be instantiated by any other combination of hardware, software, and/or firmware. For example, the hash circuitry 143 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for replacing named entities. For example, the means for replacing may be implemented by named entity replacer circuitry 144. The example named entity replacer circuitry 144 of the illustrated example of FIG. 1 applies Named Entity Recognition (NER) to replace identified entities (e.g., names) with generic tags. By doing so, entities (which are likely to change from input to input) can be identified and replaced with generic <tags>. For example the name "Jon" may be replaced with the tag "<name>". The tag "<name>" may then be tokenized into a subsequent array of tokens, which will then be more likely to match an item in the cache. When doing so, noise is minimized in such a way that a new attempt at discovering highly similar MinHashes will be more successful than in the first stage.

In some examples, the named entity replacer circuitry 144 may be instantiated by programmable circuitry such as the example programmable circuitry 512 of FIG. 5. For instance, the named entity replacer circuitry 144 may be instantiated by the example microprocessor 600 of FIG. 6 executing machine executable instructions such as those implemented by at least blocks 702, 704 of FIG. 7. In some examples, the named entity replacer circuitry 144 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the named entity replacer circuitry 144 may be instantiated by any other combination of hardware, software, and/or firmware. For example, the named entity replacer circuitry 144 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for querying a cache. For example, the means for querying may be implemented by cache query circuitry 145. The example cache query circuitry 145 of the illustrated example of FIG. 1 uses a MinHash (produced by the hash circuitry 143) to query an LSH Forest within the cache 147. An LSH Forest is a probabilistic data structure that can hold a large collection of MinHashes and allows for the discovery of the similar neighbors when it is queried with a given MinHash. Resultant similarity values are represented within a range of zero to one, with values closer to one representing items that are more similar.

In some examples, the cache query circuitry 145 may be instantiated by programmable circuitry such as the example programmable circuitry 512 of FIG. 5. For instance, the cache query circuitry 145 may be instantiated by the example microprocessor 600 of FIG. 6 executing machine executable instructions such as those implemented by at least blocks 702, 704 of FIG. 7. In some examples, the cache query circuitry 145 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the cache query circuitry 145 may be instantiated by any other combination of hardware, software, and/or firmware. For example, the cache query circuitry 145 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example cache 147 of the illustrated example of FIG. 1 is implemented by any memory, storage device, and/or storage disc for storing data such as, for example, flash memory, magnetic media, optical media, solid state memory, hard drive(s), thumb drive(s), etc. Furthermore, the data stored in the example cache 147 may be in any data format such as, for example, binary data, comma delimited data, tab delimited data, structured query language (SQL) structures, etc. While, in the illustrated example, the cache 147 is illustrated as a single device, the example cache 147 and/or any other data storage devices described herein may be implemented by any number and/or type(s) of memories. In the illustrated example of FIG. 1, the example cache 147 stores the LSH forest that is queried by the cache query circuitry 145.

In some examples, the generative AI caching platform 110 includes means for interfacing with an LLM. For example, the means for interfacing may be implemented by large language model interface circuitry 150. The example large language model interface circuitry 150 of the illustrated example of FIG. 1 accesses the prompt accessed by the request accessor circuitry 130 and provides the prompt to the large language model circuitry 155. The example large language model interface circuitry 150 receives a response from the large language model circuitry 155 including the response message. In some examples, when communicating with the large language model circuitry 155, the example large language model interface circuitry 150 identifies a model that is to be used by the large language model circuitry 155 to process the prompt.

In some examples, the large language model interface circuitry 150 may be instantiated by programmable circuitry such as the example programmable circuitry 512 of FIG. 5. For instance, the large language model interface circuitry 150 may be instantiated by the example microprocessor 600 of FIG. 6 executing machine executable instructions such as those implemented by at least blocks 702, 704 of FIG. 7. In some examples, the large language model interface circuitry 150 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the large language model interface circuitry 150 may be instantiated by any other combination of hardware, software, and/or firmware. For example, the large language model interface circuitry 150 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means inferring. For example, the means for inferring may be implemented by large language model circuitry 155. The example large language model circuitry 155 of the illustrated example of FIG. 1 executes a large language model to transform an input prompt into an output message. In the illustrated example of FIG. 1, the example large language model circuitry 155 may execute a select model at the direction of the large language model interface circuitry 150.

A large language model (LLM) operates by utilizing a neural network architecture known as a Transformer. LLMs are designed to generate human-like text based on a vast amount of data on which the LLM has been trained. In the illustrated example of FIG. 1, the LLM circuitry 155 is illustrated at the edge of the generative AI caching platform 110 to represent that the large language model circuitry 155 may be executed/implemented either locally to the generative AI caching platform 110 or at a computing system remote from the generative AI caching platform 110. For example, large language models may be executed in a cloud setting (e.g., remotely from the generative AI caching platform 110). Remote execution offers some advantages including, for example, that the LLM can be accessed from anywhere, providing scalability and ease of use. Cloud-based models are usually more powerful than locally-executed models, as cloud-based models typically leverage high-performance hardware and are frequently (e.g., continuously) updated with the latest improvements and fine-tuning. However, cloud-based models may raise concerns about data privacy, latency, and cost, as entities typically pay for the computational resources they consume (e.g., entities pay for use of the cloud-based model).

On the other hand, executing large language models locally provides an entity with more control over their data, and potentially lower latency for inference. Local execution can also work offline, which is beneficial in scenarios with limited Internet access or where data privacy is important. However, local execution typically requires powerful hardware, significant storage, and regular updates to maintain model performance. Examples disclosed herein reduce the amount of time for a system to respond to a request based on prior cached responses.

In some examples, the large language model circuitry 155 may be instantiated by programmable circuitry such as the example programmable circuitry 512 of FIG. 5. For instance, the large language model circuitry 155 may be instantiated by the example microprocessor 600 of FIG. 6 executing machine executable instructions such as those implemented by at least blocks 702, 704 of FIG. 7. In some examples, the large language model circuitry 155 may be instantiated by hardware logic circuitry, which may be implemented by an ASIC, XPU, or the FPGA circuitry 700 of FIG. 7 configured and/or structured to perform operations corresponding to the machine-readable instructions. Additionally or alternatively, the large language model circuitry 155 may be instantiated by any other combination of hardware, software, and/or firmware. For example, the large language model circuitry 155 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for caching. For example, the means for caching may be implemented by response caching circuitry 165. The example response caching circuitry 165 of the illustrated example of FIG. 1 stores one or more artifacts into the cache 147, including, for example, a first hash "M1" which is the MinHash of tokens corresponding to the original input text, a second hash "M2" which is the MinHash of the tokens corresponding to the NER-processed input text, and the result of the execution of the large language model circuitry 155 (e.g., a probability value, a score, generated text, etc.). By storing these artifacts, the example response caching circuitry 165 ensures that both stages of the cache can function properly when later querying and retrieving cached records.

In some examples, the response caching circuitry 165 may be instantiated by programmable circuitry such as the example programmable circuitry 512 of FIG. 5. For instance, the response caching circuitry 165 may be instantiated by the example microprocessor 600 of FIG. 6 executing machine executable instructions such as those implemented by at least blocks 702, 704 of FIG. 7. In some examples, the response caching circuitry 165 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the response caching circuitry 165 may be instantiated by any other combination of hardware, software, and/or firmware. For example, the response caching circuitry 165 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the generative AI caching platform 110 includes means for providing a response. For example, the means for providing may be implemented by response provider circuitry 180.The example response provider circuitry 180 of the illustrated example of FIG. 1 provides a response message to the user 102. In some examples, the response message may be a cached response message (e.g., a message stored in the cache 147), or may be based on a cached response message. Alternatively, the response message may be a response message that was generated by the large language model circuitry 155.

In some examples, the response provider circuitry 180 may be instantiated by programmable circuitry such as the example programmable circuitry 512 of FIG. 5. For instance, the response provider circuitry 180 may be instantiated by the example microprocessor 600 of FIG. 6 executing machine executable instructions such as those implemented by at least blocks 702, 704 of FIG. 7. In some examples, the response provider circuitry 180 may be instantiated by hardware logic circuitry, which may be implemented by an ASIC, XPU, or the FPGA circuitry 700 of FIG. 7 configured and/or structured to perform operations corresponding to the machine readable instructions. Additionally or alternatively, the response provider circuitry 180 may be instantiated by any other combination of hardware, software, and/or firmware. For example, the response provider circuitry 180 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the generative AI caching platform 110 of FIG. 1 is illustrated in FIG. 1, one or more of the elements, processes, and/or devices illustrated in FIG. 1 may be combined, divided, re-arranged, omitted, eliminated, and/or implemented in any other way. Further, the example request accessor circuitry 130, the example normalizer circuitry 135, the example tokenizer circuitry 140, the example hash circuitry 143, the example named entity replacer circuitry 144, the example cache query circuitry 145, the example large language model interface circuitry 150, the example large language model circuitry 155, the example response caching circuitry 165, the example response provider circuitry 180, and/or, more generally, the example generative AI caching platform 110 of FIG. 1, may be implemented by hardware alone or by hardware in combination with software and/or firmware. Thus, for example, any of the example request accessor circuitry 130, the example normalizer circuitry 135, the example tokenizer circuitry 140, the example hash circuitry 143, the example named entity replacer circuitry 144, the example cache query circuitry 145, the example large language model interface circuitry 150, the example large language model circuitry 155, the example response caching circuitry 165, the example response provider circuitry 180, and/or, more generally, the example generative AI caching platform 110, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), tensor processing unit(s) (TPU(s)), digital signal processor(s) (DSP(s)), ASIC(s), programmable logic device(s) (PLD(s)), and/or field programmable logic device(s) (FPLD(s)) such as FPGAs. Further still, the example generative AI caching platform 110 of FIG. 1 may include one or more elements, processes, and/or devices in addition to, or instead of, those illustrated in FIG. 1, and/or may include more than one of any or all of the illustrated elements, processes and devices.

A flowchart representative of example machine readable instructions, which may be executed by programmable circuitry to implement and/or instantiate the generative AI caching platform 110 of FIG. 1 and/or representative of example operations which may be performed by programmable circuitry to implement and/or instantiate the generative AI caching platform 110 of FIG. 1, are shown in FIG. 2. The machine readable instructions may be one or more executable programs or portion(s) of one or more executable programs for execution by programmable circuitry such as the programmable circuitry 512 shown in the example processor platform 500 discussed below in connection with FIG. 5 and/or may be one or more function(s) or portion(s) of functions to be performed by the example programmable circuitry (e.g., an FPGA) discussed below in connection with FIGS. 6 and/or 7. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 2, many other methods of implementing the example generative AI caching platform 110 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 2 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 2 is a flowchart representative of example machine readable instructions and/or example operations 200 that may be executed, instantiated, and/or performed by programmable circuitry to identify and provide a cached response to a prompt for execution of a generative AI model. The example machine-readable instructions and/or the example operations 200 of FIG. 2 begin at block 205, at which the request accessor circuitry 130 receives a request. This request contains the input text (e.g., email text) in its raw format.

The example process continues through a first stage 207, where a low-cost analysis is performed to attempt to identify a matching request stored in the cache; then through a second stage 208, where a second attempt is performed using named entity recognition to attempt to identify a matching request stored in the cache; and then through a third stage 209, where an AI model is utilized to generate a response.

The example request accessor circuitry 130 determines whether the first stage 207 is to be skipped. (Block 206). Such a determination may be made based on a configuration of the generative AI caching platform 110 and may be set, for example, based on a type of application and/or domain in which the generative AI caching platform 110 is to be used. For example, in a use case where an explanation of whether a text message (e.g., an SMS message) is malicious (e.g., a scam), the first stage may be used (e.g., not skipped) because there is a high likelihood of a similar message (and corresponding response) being found. Conversely, a system designed to identify whether an email message is malicious might have the first stage 207 skipped because of a lower likelihood of finding a match for an email message using the first stage 207. In some examples, the determination of whether to skip the first stage 207 may be based on the accessed input text. For example, if a length of the input text is longer than a threshold length, the first stage 207 may be skipped because even minute deviations in the text might result in a lower likelihood of finding a match.

If the first stage of analysis 207 is to be performed (e.g., block 206 returns a result of NO), the example normalizer circuitry 135 normalizes the text. (Block 210). To normalize the text, all characters are modified to their lowercase format, non-text characters (e.g., emojis) are removed, etc.

The tokenizer circuitry 140 tokenizes the normalized text. (Block 212). After running the text through the tokenizer circuitry 140, an array of tokens is produced. Probabilistically speaking, it is likely that two different texts can end up being represented by the same list of tokens. This happens as a result of the tokenizer circuitry 140 transforming text into tokens, as many symbols or characters will be dropped by the tokenizer circuitry (and/or normalizer circuitry 135), or will be replaced by generic tokens (or even the unknown token when the bytes are outside of the tokenizer dictionary). Elements such as emojis or foreign characters or non-printable symbols are all good examples of bytes that are likely to be deleted or get normalized in such a way that the tokenized text may end up being identical to the one coming from a different raw input text. In this manner, it does not matter if two input texts (e.g., in their raw format) are different if the tokenized version will be the same for both of them, as the GenAI model only consumes tokens and not raw text. Because of this, the cache 147 operates with tokens and not with raw text.

Once the input text is tokenized, the hash circuitry 143 performs a minhash operation on the array of tokens, resulting in MinHash "M1". (Block 215). A MinHash is a Locality Sensitive Hashing (LSH) scheme that can be used to measure the similarity between two samples, using for example the Jaccard distance. The cache query circuitry 145 uses the MinHash "M1" to query an LSH Forest within the cache 147. (Block 220). An LSH Forest is a probabilistic data structure that can hold a large collection of MinHashes and allows for the discovery of the similar neighbors when it is queried with a given MinHash. By leveraging this data structure, examples disclosed herein can be used to query the cache 147 to determine if there is a similar MinHash that meets a threshold similarity (e.g., is at least 98% similar). The threshold similarity is an arbitrary threshold that can be adjusted based on each application. If there is a similar MinHash (e.g., resulting in Block 225 returning a result of YES), this means that a highly similar request has been seen (and cached) before, enabling the response provider circuitry 180 to re-use the response that was provided for that prior request. (Block 230). The response (e.g., the cached inference) may be, for example, a prediction score, a predicted probability, generated text, etc. While returning a GenAI inference from a similar request may introduce some error, there is expected to be a negligible drop in accuracy, especially if the thresholds have been properly adjusted based on the use case and the sensitivity of the solution. In most cases, the gain in throughput obtained by this cache greatly exceeds the potential drop in accuracy. Given that tokenization, MinHash computation, and LSH Forest query are all quite fast and CPU-bound operations, the computational cost of running this first stage of the cache is quite low and hence the most affordable way of serving a query.

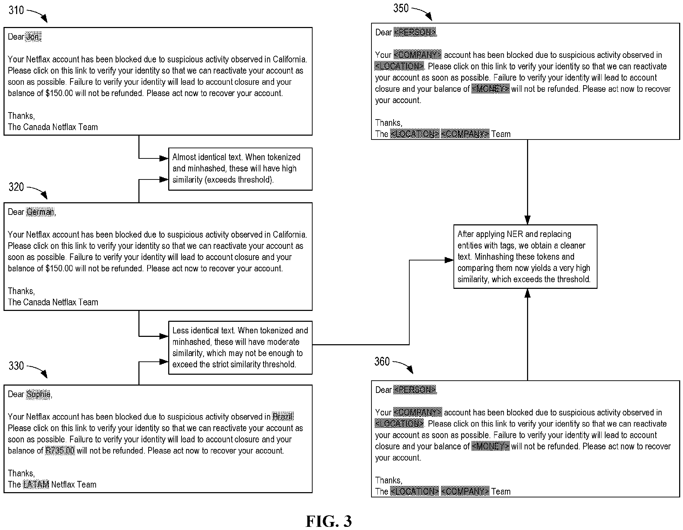

However, if this first stage 207 does not result in finding a response that meets the threshold similarity (e.g., block 225 returns a result of NO), then control proceeds to the second stage 208. There is a significant probability of an input text not being similar enough to another cached entry (resulting in a non-match within the first stage 207), even if they share the same core and spirit. Consider an example where the first stage similarity threshold is defined at 99%, and two input texts are as follows: "Dear Sophie, your account has been blocked." and "Dear Jon, your account has been blocked." Because of the high similarity threshold, the first stage cache 207 will yield a miss as a result of the 1-word difference (and because this text is quite short). A threshold similarity of 97% may have returned a cache match, but the cached response may have referred to the user by an incorrect name (e.g., Sophie vs. Jon). This phenomenon is more profound when the input text is large and there are many words that are different, and yet the overall input text spirit is the same. An example of this is further described in connection with FIG. 3, below.

If either the request accessor circuitry 130 determines that the first stage 207 is to be skipped (block 206 returns a result of YES), or the example cache query circuitry 145 determines that a match has not been found (block 225 returns a result of NO), the example process 200 of FIG. 2 proceeds to the second stage 208. In the second stage 208, the example named entity replacer circuitry 144 applies Named Entity Recognition (NER) to replace identified entities (e.g., names) with generic tags. (Block 240). By doing so, entities (which are likely to change from input to input) can be identified and replaced with generic <tags>. When doing so, noise is minimized in such a way that a new attempt at discovering highly similar MinHashes will be more successful than in the first stage. The tradeoff here is that running NER can be more expensive than running the first stage, which is why utilizing the named entity replacer circuitry 144 to perform NER is reserved for the second stage in a conditional fashion.

After replacing the entities with generic tags, the new text is normalized by the normalizer circuitry 135 (block 245) and tokenized by the tokenizer circuitry 140 (block 247). The resulting array of tokens from the tokenizer circuitry 140 is hashed by the hash circuitry 143 to produce a second MinHash "M2". (Block 250). The cache query circuitry 145 queries the LSH Forest with "M2" (Block 255), resulting in an additional opportunity to discover a highly similar cached record that can exceed the similarity threshold. In some examples, the similarity threshold used for this second LSH query (of block 255), is different from the similarity threshold used for the first LSH query (of block 220).

If the threshold similarity is met (e.g., block 260 returns a result of YES), the example response provider circuitry 180 returns the cached result. (Block 265). In some examples, generic tags are replaced within the cached response (e.g., to replace a generic tag with a named entity). This effectively avoids having to execute the generative AI model inference, which is still the most computationally expensive operation in the system.

Finally, if the second stage does not result in a cache match (e.g., block 260 returns a result of NO), the example large language model interface circuitry 150 causes the large language model circuitry 155 to execute the generative AI model using the input (e.g.,the accessed imput text of block 205). (Block 270). In some examples, the example large language model interface circuitry 150 may cause the large language model circuitry 155 to execute the modified version of the input text (e.g., based on the named entity replacement performed at block 240). The example response caching circuitry 165 then stores one or more artifacts into the cache, including, for example, the first hash "M1" which is the MinHash of tokens corresponding to the original input text, the second hash "M2" which is the MinHash of the tokens corresponding to the NER-processed input text, and the result of the execution of the large language model circuitry 155 (e.g., a probability value, a score, generated text, etc.). By storing these artifacts, we ensure that both stages of the cache can function properly when later querying and retrieving cached records.

The example response provider circuitry 180 then returns the result of the execution of the generative AI. (Block 280). The example process of FIG. 2 then terminates, but may be re-executed upon receipt of a subsequent request.

FIG. 3 is a diagram illustrating example inputs and their corresponding similarities. The example diagram illustrates a first request 310, a second request 320, and a third request 330. In a first stage of analysis (e.g., the first stage 207 of FIG. 2), the first and second requests 310, 320 are identified as being 99% similar, resulting in a cache hit. As a result, the response to the first request can also be used for the second request, avoiding the need to re-generate a response using generative AI.

The third request 330, however, while being somewhat similar to the first request 310 (and/or the second request 320), includes enough differences (e.g., a person's name, a company name, a location, a monetary value, etc.), that the resulting similarity does not meet the similarity threshold of the first stage 207. As a result, the third request 330 would proceed to the second stage 208 of FIG. 2. In such an example, it is assumed that NER had been previously applied to the first request 310, resulting in a first modified request 350. During the second stage 208, NER is applied to the third request 330 (resulting in a second modified request 360), and the similarity is compared to the first modified request 350, which results in a 100% similarity match. A corresponding response message that was used when replying to the first request 310 may then be used when replying to the third request 330.

FIG. 4 is a diagram illustrating amounts of time taken to generate responses, using various generative AI caching strategies. A first graph 410 illustrates amounts of time to service requests if no cache were to be used (e.g., only the third stage 209). The first scenario doesn't use any cache, so all queries would have to run GenAI inference, with the consequent penalty in response time and cost.

A second graph 420 illustrates amounts of time to service requests if only exact cache matches are used (e.g., the first stage 207 and the third stage 209). The second scenario uses a traditional (exact hit) cache. While this helps, it doesn't optimize much and so the overall system is still costly to run.

A third graph 430 illustrates amounts of time to service requests if exact cache matches and NER-modified matches are used (e.g., the first stage 207, the second stage 208, and the third stage 209). Across each of the graphs, a horizontal axis represents an identifier of a tested request (e.g., a prompt), and a vertical axis represents an amount of time required to process the request (e.g., the prompt). The third scenario uses the cache proposed in this invention, where you can see that a significant number of queries are served based on the similarity of previously cached records, resulting in a significant throughput improvement.

In examples disclosed herein, a potential throughput improvement of up to 98% has been demonstrated, depending on the selected similarity thresholds and domain of application.

FIG. 5 is a block diagram of an example programmable circuitry platform 500 structured to execute and/or instantiate the example machine-readable instructions and/or the example operations of FIG. 2 to implement the generative AI caching platform 110 of FIG. 1. The programmable circuitry platform 500 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 500 of the illustrated example includes programmable circuitry 512. The programmable circuitry 512 of the illustrated example is hardware. For example, the programmable circuitry 512 can be implemented by one or more integrated circuits, logic circuits, FPGAs, microprocessors, CPUs, GPUs, TPUs, DSPs, and/or microcontrollers from any desired family or manufacturer. The programmable circuitry 512 may be implemented by one or more semiconductor based (e.g., silicon based) devices. In this example, the programmable circuitry 512 implements the example generative AI caching platform 110.

The programmable circuitry 512 of the illustrated example includes a local memory 513 (e.g., a cache, registers, etc.). The programmable circuitry 512 of the illustrated example is in communication with main memory 514, 516, which includes a volatile memory 514 and a non-volatile memory 516, by a bus 518. The volatile memory 514 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 516 may be implemented by flash memory and/or any other desired type of memory device. Access to the main memory 514, 516 of the illustrated example is controlled by a memory controller 517. In some examples, the memory controller 517 may be implemented by one or more integrated circuits, logic circuits, microcontrollers from any desired family or manufacturer, or any other type of circuitry to manage the flow of data going to and from the main memory 514, 516.

The programmable circuitry platform 500 of the illustrated example also includes interface circuitry 520. The interface circuitry 520 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 522 are connected to the interface circuitry 520. The input device(s) 522 permit(s) a user (e.g., a human user, a machine user, etc.) to enter data and/or commands into the programmable circuitry 512. The input device(s) 522 can be implemented by, for example, an audio sensor, a microphone, a camera (still or video), a keyboard, a button, a mouse, a touchscreen, a trackpad, a trackball, an isopoint device, and/or a voice recognition system.

One or more output devices 524 are also connected to the interface circuitry 520 of the illustrated example. The output device(s) 524 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 520 of the illustrated example, thus, typically includes a graphics driver card, a graphics driver chip, and/or graphics processor circuitry such as a GPU.

The interface circuitry 520 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 526. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 500 of the illustrated example also includes one or more mass storage discs or devices 528 to store firmware, software, and/or data. Examples of such mass storage discs or devices 528 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 532, which may be implemented by the machine readable instructions of FIG. 2, may be stored in the mass storage device 528, in the volatile memory 514, in the non-volatile memory 516, and/or on at least one non-transitory computer readable storage medium such as a CD or DVD which may be removable.

FIG. 6 is a block diagram of an example implementation of the programmable circuitry 512 of FIG. 5. In this example, the programmable circuitry 512 of FIG. 5 is implemented by a microprocessor 600. For example, the microprocessor 600 may be a general-purpose microprocessor (e.g., general-purpose microprocessor circuitry). The microprocessor 600 executes some or all of the machine-readable instructions of the flowcharts of FIG. 2 to effectively instantiate the circuitry of FIG. 2 as logic circuits to perform operations corresponding to those machine readable instructions. In some such examples, the circuitry of FIG. 1 is instantiated by the hardware circuits of the microprocessor 600 in combination with the machine-readable instructions. For example, the microprocessor 600 may be implemented by multi-core hardware circuitry such as a CPU, a DSP, a GPU, a TPU, an XPU, etc. Although it may include any number of example cores 602 (e.g., 1 core), the microprocessor 600 of this example is a multi-core semiconductor device including N cores. The cores 602 of the microprocessor 600 may operate independently or may cooperate to execute machine readable instructions. For example, machine code corresponding to a firmware program, an embedded software program, or a software program may be executed by one of the cores 602 or may be executed by multiple ones of the cores 602 at the same or different times. In some examples, the machine code corresponding to the firmware program, the embedded software program, or the software program is split into threads and executed in parallel by two or more of the cores 602. The software program may correspond to a portion or all of the machine readable instructions and/or operations represented by the flowcharts of FIG. 2.

The cores 602 may communicate by a first example bus 604. In some examples, the first bus 604 may be implemented by a communication bus to effectuate communication associated with one(s) of the cores 602. For example, the first bus 604 may be implemented by at least one of an Inter-Integrated Circuit (I2C) bus, a Serial Peripheral Interface (SPI) bus, a PCI bus, or a PCIe bus. Additionally or alternatively, the first bus 604 may be implemented by any other type of computing or electrical bus. The cores 602 may obtain data, instructions, and/or signals from one or more external devices by example interface circuitry 606. The cores 602 may output data, instructions, and/or signals to the one or more external devices by the interface circuitry 606. Although the cores 602 of this example include example local memory 620 (e.g., Level 1 (L1) cache that may be split into an L1 data cache and an L1 instruction cache), the microprocessor 600 also includes example shared memory 610 that may be shared by the cores (e.g., Level 2 (L2 cache)) for high-speed access to data and/or instructions. Data and/or instructions may be transferred (e.g., shared) by writing to and/or reading from the shared memory 610. The local memory 620 of each of the cores 602 and the shared memory 610 may be part of a hierarchy of storage devices including multiple levels of cache memory and the main memory (e.g., the main memory 514, 516 of FIG. 5). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 602 may be referred to as a CPU, DSP, GPU, TPU, etc., or any other type of hardware circuitry. Each core 602 includes control unit circuitry 614, arithmetic and logic (AL) circuitry (sometimes referred to as an ALU) 616, a plurality of registers 618, the local memory 620, and a second example bus 622. Other structures may be present. For example, each core 602 may include vector unit circuitry, single instruction multiple data (SIMD) unit circuitry, load/store unit (LSU) circuitry, branch/jump unit circuitry, floating-point unit (FPU) circuitry, etc. The control unit circuitry 614 includes semiconductor-based circuits structured to control (e.g., coordinate) data movement within the corresponding core 602. The AL circuitry 616 includes semiconductor-based circuits structured to perform one or more mathematic and/or logic operations on the data within the corresponding core 602. The AL circuitry 616 of some examples performs integer based operations. In other examples, the AL circuitry 616 also performs floating-point operations. In yet other examples, the AL circuitry 616 may include first AL circuitry that performs integer-based operations and second AL circuitry that performs floating-point operations. In some examples, the AL circuitry 616 may be referred to as an Arithmetic Logic Unit (ALU).

The registers 618 are semiconductor-based structures to store data and/or instructions such as results of one or more of the operations performed by the AL circuitry 616 of the corresponding core 602. For example, the registers 618 may include vector register(s), SIMD register(s), general-purpose register(s), flag register(s), segment register(s), machine-specific register(s), instruction pointer register(s), control register(s), debug register(s), memory management register(s), machine check register(s), etc. The registers 618 may be arranged in a bank as shown in FIG. 6. Alternatively, the registers 618 may be organized in any other arrangement, format, or structure, such as by being distributed throughout the core 602 to shorten access time. The second bus 622 may be implemented by at least one of an I2C bus, a SPI bus, a PCI bus, or a PCIe bus.

Each core 602 and/or, more generally, the microprocessor 600 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 600 is a semiconductor device fabricated to include many transistors interconnected to implement the structures described above in one or more integrated circuits (Ics) contained in one or more packages.

The microprocessor 600 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, TPU, DSP, and/or other programmable device can also be an accelerator. Accelerators may be on-board the microprocessor 600, in the same chip package as the microprocessor 600 and/or in one or more separate packages from the microprocessor 600.

FIG. 7 is a block diagram of another example implementation of the programmable circuitry 512 of FIG. 5. In this example, the programmable circuitry 512 is implemented by FPGA circuitry 700. For example, the FPGA circuitry 700 may be implemented by an FPGA. The FPGA circuitry 700 can be used, for example, to perform operations that could otherwise be performed by the example microprocessor 600 of FIG. 6 executing corresponding machine readable instructions. However, once configured, the FPGA circuitry 700 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 600 of FIG. 6 described above (which is a general purpose device that may be programmed to execute some or all of the machine readable instructions represented by the flowchart of FIG. 2 but whose interconnections and logic circuitry are fixed once fabricated), the FPGA circuitry 700 of the example of FIG. 7 includes interconnections and logic circuitry that may be configured, structured, programmed, and/or interconnected in different ways after fabrication to instantiate, for example, some or all of the operations/functions corresponding to the machine readable instructions represented by the flowchart of FIG. 2. In particular, the FPGA circuitry 700 may be thought of as an array of logic gates, interconnections, and switches. The switches can be programmed to change how the logic gates are interconnected by the interconnections, effectively forming one or more dedicated logic circuits (unless and until the FPGA circuitry 700 is reprogrammed). The configured logic circuits enable the logic gates to cooperate in different ways to perform different operations on data received by input circuitry. Those operations may correspond to some or all of the instructions (e.g., the software and/or firmware) represented by the flowchart of FIG. 2. As such, the FPGA circuitry 700 may be configured and/or structured to effectively instantiate some or all of the operations/functions corresponding to the machine readable instructions of the flowchart of FIG. 2 as dedicated logic circuits to perform the operations/functions corresponding to those software instructions in a dedicated manner analogous to an ASIC. Therefore, the FPGA circuitry 700 may perform the operations/functions corresponding to the some or all of the machine readable instructions of FIG. 2 faster than the general-purpose microprocessor can execute the same.

In the example of FIG. 7, the FPGA circuitry 700 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 700 of FIG. 7 may access and/or load the binary file to cause the FPGA circuitry 700 of FIG. 7 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 700 of FIG. 7 to cause configuration and/or structuring of the FPGA circuitry 700 of FIG. 7, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 700 of FIG. 7 may access and/or load the binary file to cause the FPGA circuitry 700 of FIG. 7 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 700 of FIG. 7 to cause configuration and/or structuring of the FPGA circuitry 700 of FIG. 7, or portion(s) thereof.

The FPGA circuitry 700 of FIG. 7, includes example input/output (I/O) circuitry 702 to obtain and/or output data to/from example configuration circuitry 704 and/or external hardware 706. For example, the configuration circuitry 704 may be implemented by interface circuitry that may obtain a binary file, which may be implemented by a bit stream, data, and/or machine-readable instructions, to configure the FPGA circuitry 700, or portion(s) thereof. In some such examples, the configuration circuitry 704 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 706 may be implemented by external hardware circuitry. For example, the external hardware 706 may be implemented by the microprocessor 600 of FIG. 6.

The FPGA circuitry 700 also includes an array of example logic gate circuitry 708, a plurality of example configurable interconnections 710, and example storage circuitry 712. The logic gate circuitry 708 and the configurable interconnections 710 are configurable to instantiate one or more operations/functions that may correspond to at least some of the machine readable instructions of FIG. 2 and/or other desired operations. The logic gate circuitry 708 shown in FIG. 7 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 708 to enable configuration of the electrical structures and/or the logic gates to form circuits to perform desired operations/functions. The logic gate circuitry 708 may include other electrical structures such as look-up tables (LUTs), registers (e.g., flip-flops or latches), multiplexers, etc.

The configurable interconnections 710 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 708 to program desired logic circuits.

The storage circuitry 712 of the illustrated example is structured to store result(s) of the one or more of the operations performed by corresponding logic gates. The storage circuitry 712 may be implemented by registers or the like. In the illustrated example, the storage circuitry 712 is distributed amongst the logic gate circuitry 708 to facilitate access and increase execution speed.

The example FPGA circuitry 700 of FIG. 7 also includes example dedicated operations circuitry 714. In this example, the dedicated operations circuitry 714 includes special purpose circuitry 716 that may be invoked to implement commonly used functions to avoid the need to program those functions in the field. Examples of such special purpose circuitry 716 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 700 may also include example general purpose programmable circuitry 718 such as an example CPU 720 and/or an example DSP 722. Other general purpose programmable circuitry 718 may additionally or alternatively be present such as a GPU, a TPU, an XPU, etc., that can be programmed to perform other operations.

Although FIGS. 6 and 7 illustrate two example implementations of the programmable circuitry 512 of FIG. 5, many other approaches are contemplated. For example, FPGA circuitry may include an on-board CPU, such as one or more of the example CPU 720 of FIG. 6. Therefore, the programmable circuitry 512 of FIG. 5 may additionally be implemented by combining at least the example microprocessor 600 of FIG. 6 and the example FPGA circuitry 700 of FIG. 7. In some such hybrid examples, one or more cores 602 of FIG. 6 may execute a first portion of the machine readable instructions represented by the flowchart of FIG. 2 to perform first operation(s)/function(s), the FPGA circuitry 700 of FIG. 7 may be configured and/or structured to perform second operation(s)/function(s) corresponding to a second portion of the machine readable instructions represented by the flowcharts of FIG. 2, and/or an ASIC may be configured and/or structured to perform third operation(s)/function(s) corresponding to a third portion of the machine readable instructions represented by the flowcharts of FIG. 2.

It should be understood that some or all of the circuitry of FIG. 1 may, thus, be instantiated at the same or different times. For example, same and/or different portion(s) of the microprocessor 600 of FIG. 6 may be programmed to execute portion(s) of machine-readable instructions at the same and/or different times. In some examples, same and/or different portion(s) of the FPGA circuitry 700 of FIG. 7 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 600 of FIG. 6 may execute machine readable instructions in one or more threads executing concurrently and/or in series. In some examples, the FPGA circuitry 700 of FIG. 7 may be configured and/or structured to carry out operations/functions concurrently and/or in series. Moreover, in some examples, some or all of the circuitry of FIG. 1 may be implemented within one or more virtual machines and/or containers executing on the microprocessor 600 of FIG. 6.

In some examples, the programmable circuitry 512 of FIG. 5 may be in one or more packages. For example, the microprocessor 600 of FIG. 6 and/or the FPGA circuitry 700 of FIG. 7 may be in one or more packages. In some examples, an XPU may be implemented by the programmable circuitry 512 of FIG. 5, which may be in one or more packages. For example, the XPU may include a CPU (e.g., the microprocessor 600 of FIG. 6, the CPU 720 of FIG. 7, etc.) in one package, a DSP (e.g., the DSP 722 of FIG. 7) in another package, a GPU in yet another package, and an FPGA (e.g., the FPGA circuitry 700 of FIG. 7) in still yet another package.

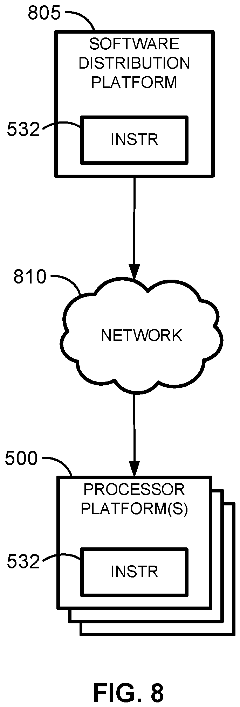

A block diagram illustrating an example software distribution platform 805 to distribute software such as the example machine readable instructions 532 of FIG. 5 to other hardware devices (e.g., hardware devices owned and/or operated by third parties from the owner and/or operator of the software distribution platform) is illustrated in FIG. 8. The example software distribution platform 805 may be implemented by any computer server, data facility, cloud service, etc., capable of storing and transmitting software to other computing devices. The third parties may be customers of the entity owning and/or operating the software distribution platform 805. For example, the entity that owns and/or operates the software distribution platform 805 may be a developer, a seller, and/or a licensor of software such as the example machine readable instructions 532 of FIG. 5. The third parties may be consumers, users, retailers, OEMs, etc., who purchase and/or license the software for use and/or re-sale and/or sub-licensing. In the illustrated example, the software distribution platform 805 includes one or more servers and one or more storage devices. The storage devices store the machine readable instructions 532, which may correspond to the example machine readable instructions of FIG. 2, as described above. The one or more servers of the example software distribution platform 805 are in communication with an example network 810, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 532 from the software distribution platform 805. For example, the software, which may correspond to the example machine readable instructions of FIG. 2, may be downloaded to the example programmable circuitry platform 500, which is to execute the machine readable instructions 532 to implement the generative AI caching platform 110. In some examples, one or more servers of the software distribution platform 805 periodically offer, transmit, and/or force updates to the software (e.g., the example machine readable instructions 532 of FIG. 5) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that enable re-use of cached responses to requests for execution of a generative AI model. Disclosed systems, apparatus, articles of manufacture, and methods improve the efficiency of using a computing device by reducing the number of requests for execution of a generative AI model (a computationally intensive task), and re-using prior outputs (e.g., responses) that were based on similar inputs (e.g., prompts). In this manner, the amount of responses that may be responded to in a given time period is increased. Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry to access a request to execute a generative artificial intelligence model;
computer readable instructions; and
programmable circuitry to at least one of execute or instantiate the instructions to:
replace a named entity within the request with a generic tag to generate a modified request;
tokenize the modified request to create an array of tokens;
detect a similar prior request based on the array of tokens; and
cause output of a cached response to the request without execution of the generative artificial intelligence model.

2. The apparatus of claim 1, wherein the programmable circuitry is to:
after a failure to detect the similar prior request, trigger execution of the generative artificial intelligence model based on the request; and
provide a generated response to the request.

3. The apparatus of claim 2, wherein the programmable circuitry is to store the generated response in the cache.

4. The apparatus of claim 3, wherein the programmable circuitry is to store the normalized request in association with the generated response in the cache.

5. The apparatus of claim 3 or claim 4, wherein the programmable circuitry is to store the array of tokens in association with the generated response in the cache.

6. The apparatus of any one of claims 1 to 5, wherein the programmable circuitry is to normalize the modified request prior to tokenization of the modified request.

7. The apparatus of any one of claims 1 to 6, wherein the programmable circuitry, to detect the similar request, is to:
create a MinHash value based on the array of tokens; and
query the cache using the MinHash value.

8. A method for use of cached artificial intelligence responses, the method comprising:
accessing a request for execution of a generative artificial intelligence model;
replacing a named entity within the request with a generic tag to form a modified request;
tokenizing the modified request to create an array of tokens;
detecting a similar prior request using the array of tokens; and
after the detection of the similar prior request, providing a cached response to the request without execution of the generative artificial intelligence model in response to the request.

9. The method of claim 8, further including:
after a failure to detect the similar prior request, providing the received request to the generative artificial intelligence model for execution; and
providing a generated response to the received request.

10. The method of claim 9, further including storing the generated response in the cache.

11. The method of claim 10, further including storing the normalized request in association with the generated response in the cache.

12. The method of claim 10 or claim 11, further including storing the array of tokens in association with the generated response in the cache.

13. The method of any one of claims 8 to 12, further including normalizing the modified request prior to tokenization of the modified request.

14. The method of any one of claims 8 to 13, wherein the detection of the similar request includes:
creating a MinHash value based on the array of tokens; and
querying the cache using the MinHash value to identify the similar prior request.

15. Machine-readable storage including machine-readable instructions, when executed, to implement a method or realize an apparatus as claimed in any preceding claim.
